# EUROPEAN PATENT APPLICATION

(11) **EP 4 776 724 A1**
(43) Date of publication of application: **15.07.2026**
(21) Application number: 23951212.2
(22) Date of filing: 08.09.2023
(51) Int. Cl.: H04W 72/20

(54) **COMMUNICATION PROCESSING METHOD AND APPARATUS**

(71) Applicant: Beijing Xiaomi Mobile Software Co., Ltd., Beijing 100085 (CN)
(72) Inventor: YANG, Xing, Beijing 100085 (CN); JIANG, Xiaowei, Beijing 100085 (CN); LI, Lisi, Beijing 100085 (CN)
(74) Representative: Stöckeler, Ferdinand
(86) International application number: PCT/CN2023/117789
(87) International publication number: WO 2025/050392

(57) **Abstract**

The present disclosure relates to the technical field of communications, and provides a communication processing method and apparatus. The method comprises: a source network device sends first information to a destination network device; wherein the first information is used for querying whether the destination network device agrees to forward data of a first AI model with the source network device. By applying the technical solution of the present disclosure, data forwarding of the first AI model between the source network device and the destination network device can be implemented, i.e., data forwarding of an AI model unrelated to a PDU session can be implemented. Furthermore, when a terminal device switches between different network devices, even if a previous Al model has not been transmitted, the requirements for complete transmission of the AI model can also be met.

## Description

### TECHNICAL FIELD

The disclosure relates to the field of communication technologies, and more particularly to a method and an apparatus for communication processing.

### BACKGROUND

A machine learning algorithm is currently one of the most important implementation methods in artificial intelligence (AI) technologies. Machine learning may obtain an AI model via a large amount of training data, and the AI model may be employed to predict an event. In multiple fields, an AI model obtained via machine learning training may achieve a very accurate prediction result.

### SUMMARY

The disclosure provides a method and an apparatus for communication processing. When a terminal hands over between different network devices, for a first artificial intelligence (AI) model that is not completely transmitted between a source network device and the terminal and requires continued transmission, data forwarding of the first AI model between the source network device and a target network device may be realized, thus enabling continued transmission of the first AI model.

A first aspect of embodiments of the disclosure provides a method for communication processing. The method is executed by a source network device, including: sending first information to a target network device, in which the first information is used to inquire whether the target network device agrees to perform data forwarding of a first AI model with the source network device.

In some embodiments of the disclosure, the first AI model is an AI model that is not completely transmitted between the source network device and a terminal and requires continued transmission.

In some embodiments of the disclosure, the data forwarding includes: downlink (DL) data forwarding of the first AI model and/or uplink (UL) data forwarding of the first AI model.

In some embodiments of the disclosure, sending the first information to the target network device includes: sending a handover request to the target network device, in which the first information is carried in the handover request.

In some embodiments of the disclosure, sending the first information to the target network device includes: sending an AI model transfer request to the target network device, in which the AI model transfer request is used to inquire whether the target network device agrees to perform the data forwarding of the first AI model with the source network device.

In some embodiments of the disclosure, the first information includes at least one of:
DL forwarding; UL forwarding proposal; identification information of a transmitted AI model; identification information of the first AI model; configuration information of a signaling radio bearer (SRB) for bearing the first AI model; or configuration information of a data radio bearer (DRB) for bearing the first AI model.

In some embodiments of the disclosure, after sending the first information to the target network device, the method also includes: receiving second information sent by the target network device; and determining, based on the second information, that the target network device agrees to perform the data forwarding of the first AI model with the source network device, and address information of a communication tunnel for the data forwarding.

In some embodiments of the disclosure, receiving the second information sent by the target network device includes: receiving a handover request acknowledge sent by the target network device, in which the second information is carried in the handover request acknowledge.

In some embodiments of the disclosure, receiving the second information sent by the target network device includes: receiving an AI model transfer request acknowledge sent by the target network device;
determining, based on the second information, that the target network device agrees to perform the data forwarding of the first AI model with the source network device, and the address information of the communication for the data forwarding includes: determining, based on the AI model transfer request acknowledge, that the target network device agrees to perform the data forwarding of the first AI model with the source network device, and the address information of the communication tunnel for the data forwarding.

In some embodiments of the disclosure, the second information includes at least one of:
DL forwarding user plane (UP) transport network layer (TNL) information; or UL forwarding UP TNL information.

In some embodiments of the disclosure, the method also includes: performing the data forwarding of the first AI model with the target network device by using the communication tunnel corresponding to the address information.

In some embodiments of the disclosure, a data packet for the data forwarding is in a format of a packet data convergence protocol (PDCP) service data unit (SDU).

In some embodiments of the disclosure, the data forwarding includes: DL data forwarding of the first AI model; the data of the first AI model includes: a first part of data already sent to the terminal and a second part of data not yet sent to the terminal;
performing the data forwarding of the first AI model with the target network device by using the communication tunnel corresponding to the address information includes:
sending a second part of data not yet sent to the terminal to the target network device by using the communication tunnel corresponding to the address information.

In some embodiments of the disclosure, the data forwarding includes: UL data forwarding of the first AI model; the data of the first AI model includes: a third part of data already received from the terminal and a fourth part of data not yet received from the terminal;
performing the data forwarding of the first AI model to the target network device by using the communication tunnel corresponding to the address information includes:
sending the third part of data already received from the terminal to the target network device by using the communication tunnel corresponding to the address information.

A second aspect of embodiments of the disclosure provides a method for communication processing. The method is executed by a target network device, including: receiving first information sent by a source network device; and determining, based on the first information, whether agrees to perform data forwarding of a first AI model with the source network device.

In some embodiments of the disclosure, the first AI model is an AI model that is not completely transmitted between the source network device and a terminal and requires continued transmission.

In some embodiments of the disclosure, the data forwarding includes: DL data forwarding of the first AI model and/or UL data forwarding of the first AI model.

In some embodiments of the disclosure, receiving the first information sent by the source network device includes: receiving a handover request sent by the source network device, in which the first information is carried in the handover request.

In some embodiments of the disclosure, receiving the first information sent by the source network device includes: receiving an AI model transfer request sent by the source network device;
determining, based on the first information, whether agrees to perform the data forwarding of the first AI model with the source network device includes: determining, based on the AI model transfer request, whether agrees to perform the data forwarding of the first AI model with the source network device.

In some embodiments of the disclosure, the first information includes at least one of:
DL forwarding; UL forwarding proposal; identification information of a transmitted AI model; identification information of the first AI model; configuration information of an SRB for bearing the first AI model; or configuration information of a DRB for bearing the first AI model.

In some embodiments of the disclosure, after determining, based on the first information, whether agrees to perform the data forwarding of the first AI model with the source network device, the method also includes: sending second information to the source network device, in which the second information is used to determine that the target network device agrees to perform the data forwarding of the first AI model with the source network device, and to determine address information of a communication tunnel for the data forwarding.

In some embodiments of the disclosure, sending the second information to the source network device includes: sending a handover request acknowledge to the source network device, in which the second information is carried in the handover request acknowledge.

In some embodiments of the disclosure, sending the second information to the source network device includes: sending an AI model transfer request acknowledge to the source network device, in which the AI model transfer request acknowledge is used to determine that the target network device agrees to perform the data forwarding of the first AI model with the source network device, and to determine the address information of the communication tunnel for the data forwarding.

In some embodiments of the disclosure, the second information includes at least one of:
DL forwarding UP TNL information; or UL forwarding UP TNL information.

In some embodiments of the disclosure, the method also includes: performing the data forwarding of the first AI model with the source network device by using the communication tunnel corresponding to the address information.

In some embodiments of the disclosure, the data forwarding includes: DL data forwarding of the first AI model; the data of the first AI model includes: a first part of data already sent by the source network device to the terminal and a second part of data not yet sent by the source network device to the terminal;
performing the data forwarding of the first AI model with the source network device by using the communication tunnel corresponding to the address information includes:
receiving, from the source network device, the second part of data by using the communication tunnel corresponding to the address information.

In some embodiments of the disclosure, the data forwarding includes: UL data forwarding of the first AI model; the data of the first AI model includes: a third part of data already received by the source network device from the terminal and a fourth part of data not yet received by the source network device from the terminal;
performing the data forwarding of the first AI model with the source network device by using the communication tunnel corresponding to the address information includes:
receiving the third part of data already sent by the source network device by using the communication tunnel corresponding to the address information.

In some embodiments of the disclosure, a data packet for the data forwarding is in a format of a PDCP SDU.

A third aspect of embodiments of the disclosure provides a method for communication processing. The method is executed by a terminal, including: performing transmission on data of a first AI model between the terminal and a target network device, in which the target network device performs data forwarding of the first AI model with a source network device.

In some embodiments of the disclosure, the first AI model is an AI model that is not completely transmitted between the terminal and the source network device and requires continued transmission.

In some embodiments of the disclosure, the data forwarding includes: DL data forwarding of the first AI model; the data of the first AI model includes: a first part of data already sent by the source network device to the terminal and a second part of data not yet sent by the source network device to the terminal;
performing transmission on the data of the first AI model with the target network device includes:
receiving the second part of data sent by the target network device.

In some embodiments of the disclosure, the UL data forwarding of the first AI model, the data of the first AI model includes: a third part of data already received by the source network device from the terminal and a fourth part of data not yet received by the source network device from the terminal;
performing transmission on the data of the first AI model with the target network device includes:
sending the fourth part of data to the target network device.

In some embodiments of the disclosure, the data forwarding includes: DL data forwarding of the first AI model and/or UL data forwarding of the first AI model.

In some embodiments of the disclosure, a data packet for the data forwarding is in a format of a PDCP SDU.

A fourth aspect of embodiments of the disclosure provides an apparatus for communication processing. The apparatus is applied to a source network device, including: a first communicating module, configured to send first information to a target network device, in which the first information is used to inquire whether the target network device agrees to perform data forwarding of a first AI model with the source network device; and the first AI model is an AI model that is not completely transmitted between the source network device and a terminal and requires continued transmission.

A fifth aspect of embodiments of the disclosure provides an apparatus for communication processing. The apparatus is applied to a target network device, including: a second communicating module, configured to receive first information sent by a source network device; and determine, based on the first information, whether agrees to perform data forwarding of a first AI model with the source network device, in which the first AI model is an AI model that is not completely transmitted between the source network device and a terminal and requires continued transmission.

A sixth aspect of embodiments of the disclosure provides an apparatus for communication processing. The apparatus is applied to a terminal, including: a third communicating module, configured to perform transmission on data of a first AI model between the terminal and a target network device, in which the first AI model is an AI model that is not completely transmitted between the terminal and the source network device and requires continued transmission; and the target network device performs data forwarding of the first AI model with a source network device.

A seventh aspect of embodiments of the disclosure provides a system for communication processing. The system includes: a source network device, a target network device, and a terminal. The source network device is configured to perform the method of the first aspect; the target network device is configured to perform the method of the second aspect; and the terminal is configured to perform the method of the third aspect.

An eighth aspect of embodiments of the disclosure provides a communication device. The communication device includes: a transceiver; a memory; and a processor respectively connected to the transceiver and the memory, configured to control wireless signal transmission and reception of the transceiver by executing computer-executable instructions stored in the memory, and enable the method of the first aspect, or the method of the second aspect, or the method of the third aspect to be realized.

A ninth aspect of embodiments of the disclosure provides a computer storage medium. The computer storage medium stores computer-executable instructions. When the computer-executable instructions are executed by a processor, the method of the first aspect, or the method of the second aspect, or the method of the third aspect is enabled to be realized.

Embodiments of the disclosure provide a method and an apparatus for communication processing. The source network device sends the first information to the target network device, in which the first information is used to inquire whether the target network device agrees to perform data forwarding of the first AI model with the source network device. With the technical solution of the embodiments, when the terminal hands over between different network devices, data forwarding of the first AI model between the source network device and the target network device may be realized, thus satisfying the requirement for complete transmission of the AI model.

Additional aspects and advantages of the disclosure may be set forth in part in the following description, and some may be obvious from the description, or learned by practice of the disclosure.

### BRIEF DESCRIPTION OF THE DRAWINGS

The above-mentioned and/or additional aspects and advantages of the disclosure will become apparent and readily appreciated from the following description of embodiments, taken in combination with the accompanying drawings.
FIG. 1 is a schematic diagram illustrating an architecture of a system for communication processing according to an embodiment of the disclosure.
FIG. 2 is a sequence diagram illustrating a method for communication processing according to an embodiment of the disclosure.
FIG. 3 is a time sequence diagram illustrating an example according to an embodiment of the disclosure.
FIG. 4 is a time sequence diagram illustrating an example according to an embodiment of the disclosure.
FIG. 5 is a flow chart illustrating a method for communication processing according to an embodiment of the disclosure.
FIG. 6 is a flow chart illustrating a method for communication processing according to an embodiment of the disclosure.
FIG. 7 is a flow chart illustrating a method for communication processing according to an embodiment of the disclosure.
FIG. 8 is a block diagram illustrating an apparatus for communication processing according to an embodiment of the disclosure.
FIG. 9 is a block diagram illustrating an apparatus for communication processing according to an embodiment of the disclosure.
FIG. 10 is a block diagram illustrating an apparatus for communication processing according to an embodiment of the disclosure.
FIG. 11 is a block diagram illustrating a communication device according to an embodiment of the disclosure.
FIG. 12 is a block diagram illustrating a chip according to an embodiment of the disclosure.

### DETAILED DESCRIPTION

Embodiments of the disclosure are described in detail below, Examples of embodiments are illustrated in the accompanying drawings, in which, the same or similar numbers represent the same or similar elements or elements with the same or similar functions. Embodiments described below with reference to the accompanying drawings are exemplary, which are intended to explain the disclosure and do not be understood a limitation of the disclosure. It should be noted that embodiments and features of embodiments of the disclosure may be combined with each other without conflict.

Embodiments of the disclosure provide a method for communication processing. In some embodiments, the terms such as "method for communication processing", "information processing method" or "communication method" may be used interchangeably; the terms such as "apparatus for communication processing", "information processing apparatus" or "communication apparatus" may be used interchangeably; and the terms such as "system for communication processing", "information processing system" or "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the alternative implementations in a certain embodiment may be arbitrarily combined. In addition, respective embodiments may be arbitrarily combined, for example, some or all steps of different embodiments may be arbitrarily combined, and a certain embodiment may be arbitrarily combined with the alternative implementations of other embodiments.

In various embodiments of the disclosure, unless otherwise specified or there is a logical conflict, the terms and/or descriptions between respective embodiments are consistent and reference to each other may be made, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In some embodiments, the descriptions such as "at least one of A, B", "A and/or B", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, the descriptions such as "A or B", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in embodiments of the disclosure are only used to distinguish different descriptive objects, and do not constitute restrictions on the position, order, priority, quantity or content of the descriptive objects. For the statement of the descriptive objects, the description in the context of the claims or embodiments may be referred to, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, there may be one or more "apparatuses". In addition, different prefixes may modify the same or different objects. For example, if the descriptive object is "an apparatus", then the "first apparatus" and the "second apparatus" may be the same apparatus or different apparatuses, and types of the "first apparatus" and the "second apparatus" may be the same or different. For another example, if the descriptive object is "information", then the "first information" and the "second information" may be the same information or different information, and contents of the "first information" and the "second information" may be the same or different.

In some embodiments, the terms such as "in response to...", "in response to determining...", "in the case of/that...", "at the time of...", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some embodiments, the apparatus and device, etc. may be interpreted as physical or virtual, and names of the apparatus and device are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the terms such as "network device", "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" or the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" or the like may be used interchangeably.

In some embodiments, "obtaining", "acquiring", "getting", "receiving", "transmission", "bidirectional transmission", "sending and/or receiving" may be interchangeable, and may be interpreted as many meanings such as receiving from other entities, obtaining from a protocol, obtaining from a higher layer, obtaining by self-processing, autonomous implementation, etc.

In some embodiments, the terms such as "sending", "emitting", "reporting", "issuing", "transmission", "bidirectional transmission", "sending and/or receiving" or the like may be used interchangeably.

In some embodiments, "predetermined" or "preset" may be interpreted as being pre-specified in a protocol, etc., or may be interpreted as an apparatus performing a pre-set action, etc.

In some embodiments, "determining" may be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, determination or judgment may be executed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as an apparatus included in the network (such as, access network device, core network device, etc.).

In some embodiments, "not expecting to receive" may be interpreted as not receiving on time domain resources and/or frequency domain resources, or as not performing subsequent processing on the data after receiving the data; "not expecting to send" may be interpreted as not sending, or as sending but not expecting the recipient to respond to the sent content.

In some embodiments, obtaining data, information, etc. may comply with the laws and regulations of the country where the data is obtained.

In some embodiments, data, information, etc. may be obtained after the agreement of the user.

In some embodiments, a threshold mentioned in embodiments may be a numerical value, a constant, or some fixed value.

In addition, each element, each row, or each column in the table of the embodiments of the disclosure may be implemented as an independent embodiment, and the combination of any elements, any rows, or any columns may also be implemented as an independent embodiment.

In a communication system, artificial intelligence (AI) may be used for prediction and reasoning to enhance a system performance. When an AI model is trained on a network side and AI inference runs on a terminal side, the network needs to transmit the AI model to the terminal. When an AI model is trained on an over the top (OTT) server and AI inference runs on a network side, the terminal needs to transmit the AI model received from the OTT server to the network.

The methods for transmitting an AI model are as follows.

Solution 1a: an AI model is transmitted between a network device and a terminal via a radio resource control (RRC) signaling.

Solution 2a: an AI model is transmitted between a core network (CN) (excluding a location management function (LMF)) and a terminal via a non access stratum (NAS) signaling.

Solution 3a: an AI model is transmitted between an LMF and a terminal via a long term evolution (LTE) positioning protocol (LPP) signaling.

Solution 1b: an AI model is transmitted between a network device and a terminal via user plane data.

Solution 2b: an AI model is transmitted between a CN (excluding an LMF) and a terminal via user plane data.

Solution 3b: an AI model is transmitted between an LMF and a terminal via user plane data.

Solution 4: a server (such as operation administration and maintenance (OAM) or OTT) transmits an AI model to a terminal (for example, this solution is transparent to 3GPP).

Currently, data may be transmitted between the network device and the terminal via the RRC signaling or the user plane data. When data is transmitted between the network device and the terminal via the RRC signaling, the data is transmitted in a signaling radio bearer (SRB), that is, the SRB is used to bear the data for transmission. When the data is transmitted between the network device and the terminal via the user plane data, the data is transmitted in a data radio bearer (DRB), that is, the DRB is used to bear the data for transmission.

In a case that the terminal hands over between different network devices, for data that requires continued transmission between the source network device and the terminal, the current protocol stack only supports data forwarding of the DRB between network devices. For example, for downlink (DL) transmission data, the source network device sends data that has not been completely transmitted in the DRB to the target network device. Subsequently, if the terminal hands over to the target network device, the target network device transmits the data to the terminal.

However, data transmitted between current network devices (that is, each DRB) is associated with a protocol data unit (PDU) session. Thus, the data forwarding is also associated with a PDU session. In the case that the AI model is transmitted between the network device and the terminal, essentially only data interaction between the network device and the terminal is involved, and there will be no corresponding PDU session. Consequently, the data forwarding of the AI model between network devices may not be performed via the DRB. Thus, the current protocol stack may not support the data forwarding of the AI model between network devices.

For this reason, embodiments provides a method and an apparatus for communication processing. The source network device sends the first information to the target network device, in which the first information is used to inquire whether the target network device agrees to perform the data forwarding of the first AI model with the source network device, and the data is not associated with the PDU session. Through the technical solution of this embodiment, the data forwarding of the first AI model between the source network device and the target network device may be achieved, thus satisfying the requirement for complete transmission of the AI model.

The method and the apparatus for communication processing provided in the disclosure are described in detail below with reference to the accompanying drawings.

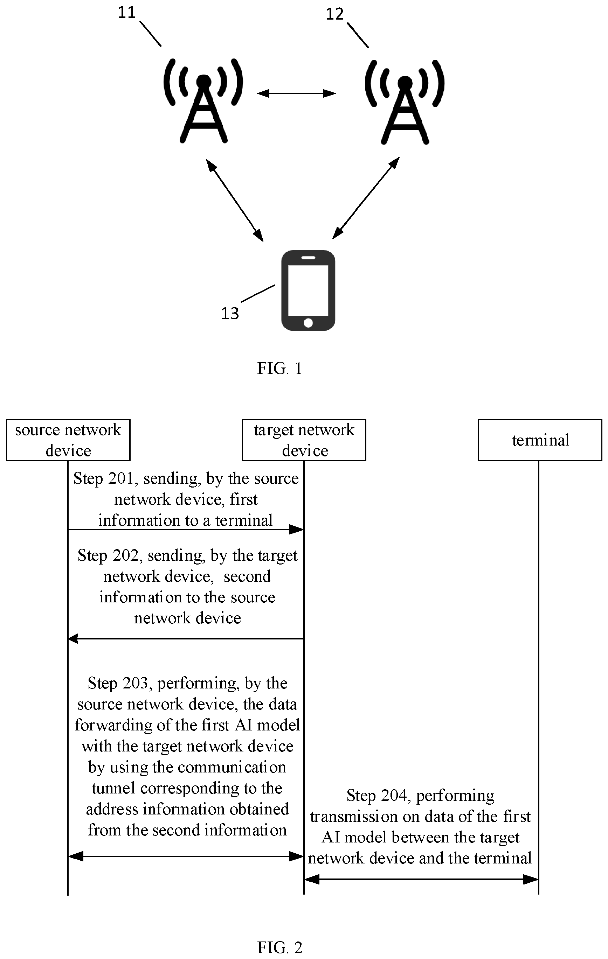

FIG. 1 is a schematic diagram illustrating an architecture of a system for communication processing according to an embodiment of the disclosure. As illustrated in FIG. 1, the architecture system may include a source network device 11, a target network device 12, and a terminal 13.

In some examples, the source network device 11 and the target network device 12 may be entities on a network side for emitting or receiving a signal. For example, the source network device 11 and the target network device 12 may be communication satellites, evolved nodeBs (eNBs), transmission reception points (TRPs), next generation nodeBs (gNBs) in an NR system, base stations in other future mobile communication systems, or access nodes in wireless fidelity (WiFi) systems, etc. A detailed technology and a detailed device form employed by the source network device 11 and the target network device 12 are not limited in embodiments of the disclosure. The source network device 11 and the target network device 12 provided in embodiments of the disclosure may be combined by a central unit (CU) and a distributed unit (DU). The CU may also be referred to as a control unit. The CU-DU structure may separate the protocol layers of a network device, such as a base station. The functions of some protocol layers are placed under centralized control of the CU, while the functions of the remaining part or all of the protocol layers are distributed in the DUs and are centrally controlled by the CU.

In some embodiments, the terminal 13 may be referred to as a terminal, a UE, a mobile station (MS), a mobile terminal (MT), etc. The terminal 13 may be a device with a communication function, such as a vehicle, a smart vehicle, a mobile phone, a wearable device, a tablet (Pad), a computer with a wireless transceiving function, a virtual reality (VR) device, an augmented reality (AR) device, a wireless device in industrial control, a wireless device in self-driving, a wireless terminal device in a remote medical surgery, a wireless UE in a smart grid, a wireless terminal device in transportation safety, a wireless terminal device in a smart city, etc. A detailed technology and a detailed device form employed by the terminal 13 are not limited in the embodiments of the disclosure.

It may be understood that the communication system described in embodiments of the disclosure is intended to explain technical solutions of embodiments of the disclosure more clearly, and does not constitute a limitation to the technical solutions according to the embodiments of the disclosure. Those skilled in the art know that, with evolution of a system architecture and emergence of a new service scenario, the technical solutions according to embodiments of the disclosure are also applied to similar technical problems.

The following embodiments of the disclosure may be applied to the communication system or some of the subjects illustrated in FIG. 1, but are not limited herein. Respective subjects illustrated in FIG. 1 are examples, and the communication system may include all or part of the subjects in FIG. 1, or may include other subjects than those illustrated in FIG. 1. The number and the form of the subjects are arbitrary. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to satellite communication, the LTE, LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some examples, the source network device 11 sends first information to the target network device 12, in which the first information is used to inquire whether the target network device 12 agrees to perform data forwarding of the first AI model with the source network device 11, and the first AI model is an AI model that is not completely transmitted between the source network device 11 and the terminal 13 and requires continued transmission. The target network device 12 sends second information to the source network device 11, and the second information is used to determine that the target network device 12 agrees to perform the data forwarding of the first AI model with the source network device 11, and determine address information of a communication tunnel for the data forwarding. The source network device 11 performs the data forwarding of the first AI model to the target network device 12 by using the communication tunnel corresponding to the address information.

With the technical solution of this embodiment, the data forwarding of the first AI model between the source network device and the target network device may be realized, thus, the data forwarding of the AI model independent of the PDU session may be realized. Further, when the terminal hands over between different network devices, even if transmission of the previous AI model is not completed, the requirement for complete transmission of the AI model may be satisfied.

Further, to illustrate a detailed execution process of the above system for communication processing, FIG. 2 illustrates a sequence diagram illustrating a method for communication processing according to an embodiment of the disclosure. The method is applied to the system for communication processing, as illustrated in FIG. 2, the method may include the following.

At step S201, a source network device sends first information to a target network device.

In some embodiments, the target network device receives the first information sent by the source network device. A mobile terminal may hand over between different serving cells. Correspondingly, for a network device corresponding to the serving cell, the terminal may also hand over between different network devices. The source network device may represent a network device before the handover, and the target network device may represent a network device after the handover. The target network device may also be referred to as a destination network device. It should be noted that detailed names of the network devices are not limited in the embodiments and are merely illustrative.

In some embodiments, the first information may be a type of communication information, such as an indication information or a signaling, etc.

The first information is used to inquire whether the target network device agrees to perform the data forwarding of a first AI model with the source network device. The first AI model may be an AI model that is not completely transmitted between the source network device and the terminal and requires continued transmission.

In some embodiments, the data forwarding of the first AI model may include: DL data forwarding of the first AI model and uplink (UL) data forwarding of the first AI model. For example, when the first AI model is trained on a network side and AI inference runs on a terminal side, the network needs to transmit the first AI model to the terminal. Such case corresponds to the DL data forwarding of the first AI model. When the first AI model is trained on an OTT server and AI inference runs on a network side, the terminal needs to transmit the first AI model received from the OTT server to the network. Such case corresponds to the UL data forwarding of the first AI model.

In some embodiments, as an implementation manner, step 201 may specifically include: sending a handover request to the target network device by the source network device, in which the handover request may be an Xn signaling during a handover procedure. For example, the source network device initiates a handover and sends the handover request to the target network device via an Xn interface. In this embodiment, the first information may be carried in the handover request.

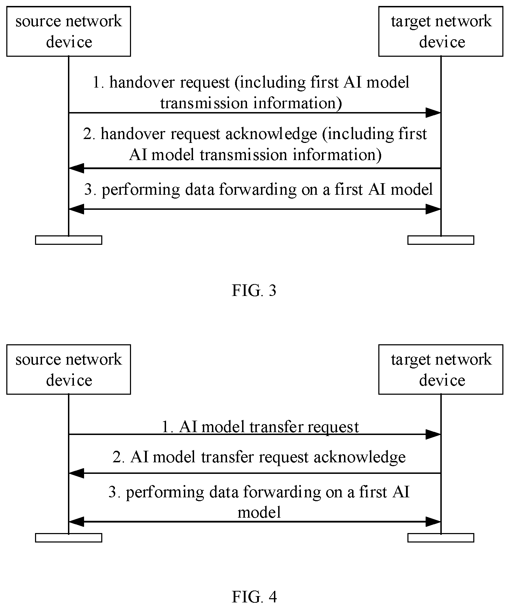

For example, as illustrated in FIG. 3, information related to the transmission of the first AI model may be added in the handover request, for inquiring whether the target network device agrees to perform the data forwarding of the first AI model with the source network device. The target network device may determine, based on an actual condition, whether the target network device agrees to perform the data forwarding of the first AI model with the source network device.

In some embodiments, as another implementation manner, embodiments may introduce a new Xn procedure and a new Xn signaling to exchange information related to AI model transmission. Correspondingly, step 201 may specifically include: sending an AI model transfer request to the target network device by the source network device, in which the AI model transfer request may be used to inquire whether the target network device agrees to perform the data forwarding of the first AI model with the source network device. It should be noted that the name of the message is merely illustrative and is not limited in the embodiments. For example, the massage may also be referred to by other names based on an actual requirement.

For example, as illustrated in FIG. 4, the source network device may send the AI model transfer request message to the target network device, for inquiring whether the target network device agrees to perform the data forwarding of the first AI model with the source network device. The target network device may determine, based on an actual condition, whether the target network device agrees to perform the data forwarding of the first AI model with the source network device.

In some embodiments, the first information may include at least one of:
1. DL forwarding, indicating that the source network device proposes the target network device to perform the DL data forwarding for the transmission of the first AI model;
2. UL forwarding proposal, indicating that the source network device proposes the target network device to perform the UL data forwarding for the transmission of the first AI model;
3. identification information of a transmitted AI model, such as a list of model identifiers (IDs) of transmitted AI models, for example, a list of transferred AI models IE in Table 1; thus, the source network device may notify the target network device which AI models have already been transmitted to the terminal before the handover;
4. identification information of the first AI model, such as a list of model IDs of AI models being transmitted, for example, the list of AI models under transmission information element (IE) in Table 1, thus, the source network device may notify the target network device of the AI model corresponding to the data forwarding;
5. configuration information of an SRB used to bear the first AI model, such as information of the SRB bearing the first AI model, for example, an SRB information IE in Table 1; when the first AI model is transmitted between the network device and the terminal via an RRC signaling, the source network device may notify the target network device of the configuration information of the SRB for bearing the first AI model, the configuration information may include, but is not limited to, the content included in the SRB-ToAddMod IE and the RLC-BearerConfig IE; and
6. configuration information of a DRB for bearing the first AI model, such as information of the DRB bearing the first AI model, for example, a DRB information IE in Table 1; when the first AI model is transmitted between the network device and the terminal via user plane data, the source network device may notify the target network device of the configuration information of the DRB for bearing the first AI model; the configuration information may include, but is not limited to, the content included in the DRB-ToAddMod IE and the RLC-BearerConfig IE.

In some embodiments, as an example, as illustrated in Table 1, the underlined (_) portion is a newly added AI model transfer information IE. In the example, the IE is included within a UE context information IE. Alternatively, the AI model transfer information IE may be placed directly in the handover request message, that is, not within any sub-IE. In the example, it is assumed that an AI model may be transmitted via the RRC signaling or the user plane data; thus, a choice structure is used in the signaling. If, on a Uu interface, an AI model is only supported for transmission in the user plane data, then the DRB Information IE is retained, and the choice structure and the SRB Information IE are not required. Similarly, if, on a Uu interface, an AI model is only supported for transmission in the RRC signaling, then the SRB Information IE is retained, and the choice structure and the DRB information IE are not required.

**Table 1**

| **IE/group name** | **prese nce** | **Range** | **IE type and reference** | **semantics description** | **criticality** | **assigned criticality** |
|---|---|---|---|---|---|---|
| DL Forwarding | M | | 9.2.3.1 | | YES | reject |
| UL Forwarding | M | | NG-RAN node UE XnAP ID 9.2.3.16 | Allocated at the source NG-RAN node | YES | reject |
| Cause | M | | 9.2.3.2 | | YES | reject |
| Target Cell Global ID | M | | 9.2.3.25 | Includes either an E-UTRA CGI or an NR CGI | YES | reject |
| GUAMI | M | | 9.2.3.24 | | YES | reject |
| **UE Context Information** | | *1* | | | YES | reject |
| >NG-C UE associated Signalling reference | M | | AMF UE NGAP ID 9.2.3.26 | Allocated at the AMF on the source NG-C connection. | - | |

| ... [*Omitted]...* | | | | | | |
|---|---|---|---|---|---|---|
| >5G ProSe UE PC5 Aggregate Maximum Bit Rate | O | | NR UE Sidelink Aggregate Maximum Bit Rate 9.2.3.107 | This IE applies only if the UE is authorized for 5G ProSe services. | YES | ignore |
| >UE Slice Maximum Bit Rate List | O | | 9.2.3.167 | | YES | ignore |
| >AI Model Transfer | O | | | | YES | ignore |
| Information | | | | | | |
| >>DL Forwarding | O | | 9.2.3.34 | | YES | ignore |
| >>UL Forwarding Proposal | O | | 9.2.3.95 | | YES | ignore |
| >>List of Transferred AI Models | O | | 9.2.3.X | | YES | ignore |
| >>List of AI Models Under Transmissio n | O | | 9.2.3.X | | YES | ignore |
| >>Choice *Bearer Type* | O | | | | YES | ignore |
| *>>>srb* | | | | | - | |
| >>>>SRB Information | M | | 9.2.3.Y | | - | |
| >>>drb | | | | | | |
| >>>>DRB Information | M | | 9.2.3.Z | | - | |
| Trace | O | | 9.2.3.55 | | YES | |
| Activation | | | | | | |
| ... [*Omitted]...* | | | | | | |

In Table 1, ">", ">>", ">>>", ">>>>" respectively represent different levels to which the IE belongs; ">>" is a sub-level of ">", ">>>" is a sub-level of ">>", and ">>>>" is a sub-level of ">>>".

At step S202, the target network device sends second information to the source network device.

In some embodiments, the source network device receives the second information sent by the target network device.

In some embodiments, the second information may be a type of communication information, such as indication information or a signaling, etc.

The second information may used to determine that the target network device agrees to perform the data forwarding of the first AI model with the source network device, and to determine address information of a communication tunnel for the data forwarding.

For example, in a case that the target network device, based on the received first information, agrees to perform the data forwarding of the first AI model with the source network device, the target network device may send the second information to the source network device. The second information may carry a message indicating the agreement for forwarding and the address information of the communication tunnel used for the data forwarding; or the second information may carry only the address information of the communication tunnel for the data forwarding. Upon receiving the address information, the source network device may determine that the target network device agrees to perform the data forwarding of the first AI model with the source network device.

In some embodiments, as an implementation manner, step 202 may specifically include: sending, by the target network device, a handover request acknowledge to the source network device, in which the handover request acknowledge may be an Xn signaling during a handover procedure. For example, the target network device receives the handover request sent by the source network device, the target network device performs admission control, and provides an RRC reconfiguration in the handover request acknowledge sent to the source network device. Thus, the source network device forwards the RRC reconfiguration message in the handover request acknowledge to the terminal, thus providing the RRC configuration. The terminal moves to the serving cell corresponding to the target network device and responds with an RRC reconfiguration complete, thus realizing the handover of the terminal between network devices. In this embodiment, the second information may be carried in the handover request acknowledge.

For example, as illustrated in FIG. 3, information related to the transmission of the first AI model may be added in the handover request acknowledge, for determining that the target network device agrees to perform the data forwarding of the first AI model to the source network device, and the address information of the communication tunnel for the data forwarding. The communication tunnel is used for transmitting data of the first AI model between the source network device and the target network device.

In some embodiments, as another implementation manner, embodiments may introduce a new Xn procedure and a new signaling to exchange information related to AI model transmission. Correspondingly, step 202 may specifically include: sending, by the target network device, an AI model transfer request acknowledge to the source network device, in which the AI model transfer request acknowledge may be used to determine that the target network device agrees to perform the data forwarding of the first AI model with the source network device, and to determine the address information of the communication tunnel for the data forwarding. It should be noted that the name of the message is merely illustrative and is not limited in the embodiments. For example, the name of the message may also be referred to by other names based on actual requirements.

For example, as illustrated in FIG. 4, the target network device may send an AI model transfer request acknowledge message to the source network device, for determining that the target network device agrees to perform the data forwarding of the first AI model with the source network device, and to determine the address information of the communication tunnel for the data forwarding. The communication tunnel is used for transmitting the data of the first AI model between the source network device and the target network device.

In some embodiments, the second information includes at least one of the following.
1. DL forwarding UP TNL Information, used to determine that the target network device agrees to perform the DL data forwarding of the first AI model with the source network device, and to determine address information of a communication tunnel for the DL data forwarding.
2. UL forwarding UP TNL Information, used to determine that the target network device agrees to perform UL data forwarding of the first AI model with the source network device, and to determine address information of a communication tunnel for the UL data forwarding.

In some embodiments, as an example, as illustrated in Table 2, the underlined (_) portion is a newly added AI Model transfer UP TNL information IE.

**Table 2**

| **IE/group name** | **presence** | **Range** | **IE type and reference** | **semantics description** | **Criticality** | **assigned criticality** |
|---|---|---|---|---|---|---|
| Message Type | M | | 9.2.3.1 | | YES | reject |
| Source NG-RAN node UE XnAP ID | M | | NG-RAN node UE XnAP ID 9.2.3.16 | Allocated at the source NG-RAN node | YES | ignore |

| ... *[Omitted]...* | | | | | | |
|---|---|---|---|---|---|---|
| MBS Session Information Response List | O | | 9.2.1.38 | | YES | ignore |
| AI Model Transfer UP TNL Information | O | | | | YES | ignore |
| >DL Forwarding UP TNL Information | O | | UP Transport Laver Information 9.2.3.30 | | YES | ignore |
| >UL Forwarding UP TNL Information | O | | UP Transport Laver Information 9.2.3.30 | | YES | ignore |

In Table 2, ">" represents a level of the IE, and ">" in Table 2 indicates a sub-level.

At step 203, the source network device performs the data forwarding of the first AI model with the target network device by using the communication tunnel corresponding to the address information obtained based on the second information.

For example, the source network device performs the DL data forwarding or the UL data forwarding of the AI model data with the target network device based on user plane transport network layer information corresponding to the communication tunnel for the data forwarding.

In some embodiments, a data packet for the data forwarding of the first AI model may be in a format of a PDCP SDU, which may be similar to data forwarding at the DRB level.

For example, as illustrated in FIG. 3, the source network device performs the DL data forwarding or the UL data forwarding of the first AI model with the target network device by using the communication tunnel corresponding to the address information based on the address information of the communication tunnel carried in the handover request acknowledge.

As another example, as illustrated in FIG. 4, the source network device performs the DL data forwarding or the UL data forwarding of the first AI model with the target network device by using the communication tunnel corresponding to the address information of the communication tunnel carried in the AI model transfer request acknowledge message.

At step 204, data of the first AI model is transmitted between the target network device and the terminal.

In some embodiments, the data forwarding of the first AI model includes: DL data forwarding of the first AI model, and the data of the first AI model includes: a first part of data already sent to the terminal and a second part of data not yet sent to the terminal; and performing, by the source network device, the data forwarding of the first AI model with the target network device by using the communication tunnel corresponding to the address information includes: sending the second part of data to the target network device by using the communication tunnel corresponding to the address information.

In some embodiments, the data forwarding of the first AI model includes: UL data forwarding of the first AI model, and the data of the first AI model includes: a third part of data already received from the terminal and a fourth part of data not yet received from the terminal; and performing, by the source network device, the data forwarding of the first AI model with the target network device by using the communication tunnel corresponding to the address information includes: sending the third part of data to the target network device by using the communication tunnel corresponding to the address information.

For example, before the network device hands over, the terminal already transmits a part A of the first AI model data to the source network device. After the network device hands over, the terminal may continue to transmit a part B of the first AI model data to the target network device. For UL transmission, the terminal already uploads the part A data to the source network device, and the source network device sends the part A data to the target network device. In a case that the terminal hands over to the target network device, the terminal may continue to upload the part B data to the target network device. The target network device may obtain the first AI model data based on the part A data sent by the source network device and the part B data uploaded by the terminal.

For DL transmission, the source network device already sends the part A data to the terminal. When the source network device determines that the terminal is to hand over to the target network device, the source network device may send the part B data to the target network device. Thus, in a case that the terminal hands over to the target network device, the target network device may continue to send the part B data to the terminal. The terminal may obtain the first AI model data based on the part A data sent by the source network device and the part B data sent by the target network device.

It should be noted that, in some embodiments, step 203 and step 204 may also be executed in parallel to a certain extent. When the source network device performs the data forwarding of the first AI model with the target network device at step 203, in a case that the terminal already hands over to the target network device, step 204 may also be executed at this time. That is, the target network device may perform transmission on data of the first AI model with the terminal while receiving the data of the first AI model forwarded by the source network device.

For example, for the DL transmission, the source network device already sends the part A data of the first AI model data to the terminal. The source network device forwards the part B data of the first AI model data to the target network device. At this time, in a case that the terminal already hands over to the target network device, the target network device sends the part B data received in real time to the terminal. The terminal may obtain the first AI model data based on the part A data sent by the source network device and the part B data sent by the target network device.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

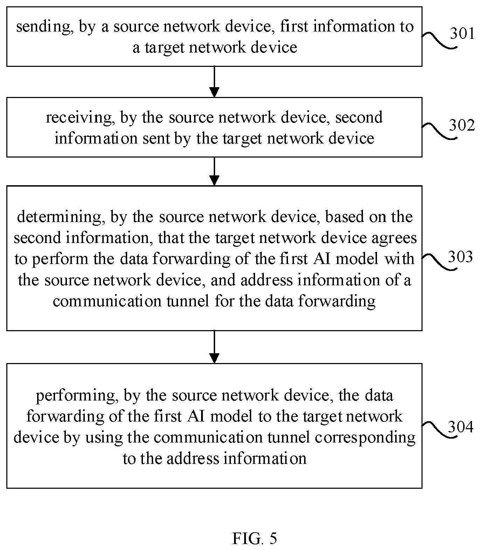

To illustrate a detailed execution process of the source network device, FIG. 5 illustrates a flow chart illustrating a method for communication processing according to an embodiment of the disclosure. The method is executed by a source network device, and may include the following.

At step 301, a source network device sends first information to a target network device.

The first information is used to inquire whether the target network device agrees to perform data forwarding of a first AI model with the source network device. The first AI model is an AI model that is not completely transmitted between the source network device and a terminal and requires continued transmission.

In some embodiments, the data forwarding includes: DL data forwarding of the first AI model and/or UL data forwarding of the first AI model.

In some embodiments, step 301 may specifically include: sending, by the source network device, a handover request to the target network device, in which the first information is carried in the handover request.

In some embodiments, step 301 may specifically include: sending, by the source network device, an AI model transfer request to the target network device, in which the AI model transfer request is used to inquire whether the target network device agrees to perform the data forwarding of the first AI model with the source network device.

In some embodiments, the first information includes at least one of:
1. DL forwarding; 2. UL forwarding proposal; 3. identification information of a transmitted AI model; 4. identification information of the first AI model; 5. configuration information of an SRB for bearing the first AI model; or 6. configuration information of a DRB for bearing the first AI model.

At step 302, the source network device receives second information sent by the target network device.

In some embodiments, step 302 may specifically include: receiving, by the source network device, a handover request acknowledge sent by the target network device, in which the second information is carried in the handover request acknowledge.

In some embodiments, step 302 may specifically include: receiving, by the source network device, an AI model transfer request acknowledge sent by the target network device.

In some embodiments, the second information includes at least one of:
1. DL forwarding UP TNL information; or 2. UL forwarding UP TNL information.

At step 303, the source network device determines, based on the second information, that the target network device agrees to perform the data forwarding of the first AI model with the source network device, and to determine address information of a communication tunnel for the data forwarding.

In some embodiments, step 303 may specifically include that: the source network device determines, based on the AI model transfer request acknowledge, that the target network device agrees to perform the data forwarding of the first AI model with the source network device, and the address information of the communication tunnel for the data forwarding.

At step 304, the source network device performs the data forwarding of the first AI model with the target network device by using the communication tunnel corresponding to the address information.

In some embodiments, the data forwarding includes: DL data forwarding of the first AI model, and the data of the first AI model includes: a first part of data already sent to the terminal and a second part of data not yet sent to the terminal; performing the data forwarding of the first AI model with the target network device by using the communication tunnel corresponding to the address information includes: sending the second part of data to the target network device by using the communication tunnel corresponding to the address information.

In some embodiments, the data forwarding includes: UL data forwarding of the first AI model, and the data of the first AI model includes: a third part of data already received from the terminal and a fourth part of data not yet received from the terminal; performing the data forwarding of the first AI model with the target network device by using the communication tunnel corresponding to the address information includes: sending the third part of data to the target network device by using the communication tunnel corresponding to the address information.

In some embodiments, a data packet for the data forwarding may be in a format of a PDCP SDU.

For a description of specific examples in this embodiment, please refer to the corresponding descriptions of the embodiments in FIG. 1 to FIG. 4, which is not repeated herein.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

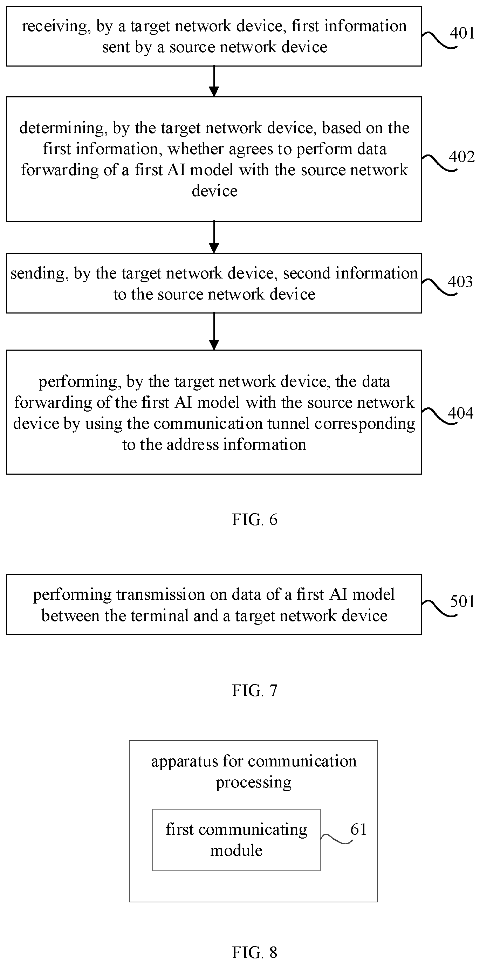

FIG. 6 is a flow chart illustrating a method for communication processing according to an embodiment of the disclosure. As illustrated in FIG. 6, the method is executed by a target network device, and may include the following.

At step 401, the target network device receives first information sent by a source network device.

In some embodiments, step 401 may specifically include: receiving, by the target network device, a handover request sent by the source network device, in which the first information is carried in the handover request.

In some embodiments, step 401 may specifically include: receiving, by the target network device, an AI model transfer request sent by the source network device.

In some embodiments, the first information includes at least one of:
1. DL forwarding; 2. UL forwarding proposal; 3. identification information of a transmitted AI model; 4. identification information of the first AI model; 5. configuration information of an SRB for bearing the first AI model; or 6. configuration information of a DRB for bearing the first AI model.

At step 402, the target network device determines, based on the first information, whether agrees to perform data forwarding of a first AI model with the source network device.

In some embodiments, the first AI model is an AI model that is not completely transmitted between the source network device and a terminal and requires continued transmission.

In some embodiments, step 402 may specifically include: the target network device determining, based on the AI model transfer request, whether agrees to perform the data forwarding of the first AI model with the source network device.

In some embodiments, the data forwarding includes: DL data forwarding of the first AI model and UL data forwarding of the first AI model.

At step 403, the target network device sends second information to the source network device.

The second information is used to determine that the target network device agrees to perform the data forwarding of the first AI model with the source network device, and to determine address information of a communication tunnel for the data forwarding.

In some embodiments, step 403 may specifically include: sending, by the target network device, a handover request acknowledge to the source network device, in which the second information is carried in the handover request acknowledge.

In some embodiments, step 403 may specifically include: sending, by the target network device, an AI model transfer request acknowledge to the source network device, in which the AI model transfer request acknowledge is used to determine that the target network device agrees to perform the data forwarding of the first AI model with the source network device, and to determine the address information of the communication tunnel for the data forwarding.

In some embodiments, the second information includes at least one of:
1. DL forwarding UP TNL information; or 2. UL forwarding UP TNL information.

At step 404, the target network device performs the data forwarding of the first AI model with the source network device by using the communication tunnel corresponding to the address information.

In some embodiments, the data forwarding includes: DL data forwarding of the first AI model, and the data of the first AI model includes: a first part of data already sent by the source network device to the terminal and a second part of data not yet sent by the source network device to the terminal; and performing the data forwarding of the first AI model with the source network device by using the communication tunnel corresponding to the address information includes: receiving the second part of data sent by the source network device by using the communication tunnel corresponding to the address information.

In some embodiments, the data forwarding includes: UL data forwarding of the first AI model, and the data of the first AI model includes: a third part of data already received by the source network device from the terminal and a fourth part of data not yet received by the source network device from the terminal; and performing the data forwarding of the first AI model with the source network device by using the communication tunnel corresponding to the address information includes: receiving the third part of data sent by the source network device by using the communication tunnel corresponding to the address information.

In some embodiments, a data packet for the data forwarding may be in a format of a PDCP SDU.

For a description of detailed examples in this embodiment, please refer to the corresponding descriptions of the embodiments in FIG. 1 to FIG. 5, which is not repeated herein.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

FIG. 7 is a flow chart illustrating a method for communication processing according to an embodiment of the disclosure. As illustrated in FIG. 7, the method is executed by a terminal, and may include the following.

At step 501, transmission on data of a first AI model is performed between the terminal and a target network device.

The first AI model is an AI model that is not completely transmitted between the terminal and a source network device and requires continued transmission, and the target network device performs data forwarding of the first AI model to the source network device.

In some embodiments, the data forwarding includes: DL data forwarding of the first AI model and UL data forwarding of the first AI model.

In some embodiments, the data forwarding includes: DL data forwarding of the first AI model, and the data of the first AI model includes: a first part of data already sent by the source network device to the terminal and a second part of data not yet sent by the source network device to the terminal; performing transmission on the data of the first AI model between the terminal and the target network device includes: receiving the second part of data sent by the target network device.

In some embodiments, the data forwarding includes: UL data forwarding of the first AI model, and the data of the first AI model includes: a third part of data already received by the source network device from the terminal and a fourth part of data not yet received by the source network device from the terminal; performing transmission on the data of the first AI model between the terminal and the target network device includes: sending the fourth part of data to the target network device.

In some embodiments, a data packet for the data forwarding may be in a format of a PDCP SDU.

For a description of detailed examples in the embodiments, please refer to the corresponding descriptions of the embodiments in FIG. 1 to FIG. 6, which is not repeated herein.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

In the above embodiments according to the disclosure, description is made to the method in the embodiments of the disclosure from the perspectives of the network device and the terminal respectively. In order to realize each of the functions in the method of the above embodiments of the disclosure, the network device and the terminal may include a hardware structure and a software module, and realize each of the above functions in the form of the hardware structure, the software module, or a combination of the hardware structure and the software module. A certain function of the above functions may be executed in the form of the hardware structure, the software module, or the combination of the hardware structure and the software module.

Corresponding to the method for communication processing according to the embodiments described above, the disclosure also provides an apparatus for communication processing. Since the apparatus for communication processing according to embodiments of the disclosure corresponds to the methods according to the embodiments described above, the implementation of the method for communication processing is also applicable to the apparatus for communication processing according to the following embodiments, which is not described in detail in the following embodiments.

FIG. 8 is a block diagram illustrating an apparatus for communication processing according to an embodiment of the disclosure. The apparatus may be applied to a source network device.

As illustrated in FIG. 8, the apparatus may include: a first communicating module 61, configured to send first information to a target network device, in which the first information is used to inquire whether the target network device agrees to perform data forwarding of a first AI model with the source network device; and the first AI model is an AI model that is not completely transmitted between the source network device and a terminal and requires continued transmission.

In some embodiments, the data forwarding includes: DL data forwarding of the first AI model and UL data forwarding of the first AI model.

In some embodiments, the first communicating module 61 is also configured to: send a handover request to the target network device, in which the first information is carried in the handover request.

In some embodiments, the first communicating module 61 is also configured to: send an AI model transfer request to the target network device, in which the AI model transfer request is used to inquire whether the target network device agrees to perform the data forwarding of the first AI model with the source network device.

In some embodiments, the first information includes at least one of:
DL forwarding; UL forwarding proposal; identification information of a transmitted AI model; identification information of the first AI model; configuration information of an SRB for bearing the first AI model; or configuration information of a DRB for bearing the first AI model.

In some embodiments, the first communicating module 61 is also configured to: receive second information sent by the target network device; and determine, based on the second information, that the target network device agrees to perform the data forwarding of the first AI model with the source network device, and address information of a communication tunnel for the data forwarding.

In some embodiments, the first communicating module 61 is also configured to: receive a handover request acknowledge sent by the target network device, in which the second information is carried in the handover request acknowledge.

In some embodiments, the first communicating module 61 is also configured to: receive an AI model transfer request acknowledge sent by the target network device; and determine, based on the AI model transfer request acknowledge, that the target network device agrees to perform the data forwarding of the first AI model with the source network device, and the address information of the communication tunnel for the data forwarding.

In some embodiments, the second information includes at least one of:
DL forwarding UP TNL information; or UL forwarding UP TNL information.

In some embodiments, the first communicating module 61 is also configured to: perform the data forwarding of the first AI model with the target network device by using the communication tunnel corresponding to the address information.

In some embodiments, the data forwarding includes: DL data forwarding of the first AI model; and the data of the first AI model includes: a first part of data already sent to the terminal and a second part of data not yet sent to the terminal;
the first communicating module 61 is also configured to: send the second part of data to the target network device by using the communication tunnel corresponding to the address information.

In some embodiments, the data forwarding includes: UL data forwarding of the first AI model, and the data of the first AI model includes: a third part of data already received from the terminal and a fourth part of data not yet received from the terminal;
the first communicating module 61 is also configured to: send the third part of data to the target network device by using the communication tunnel corresponding to the address information.

In some embodiments, a data packet for the data forwarding may be in a format of a PDCP SDU.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

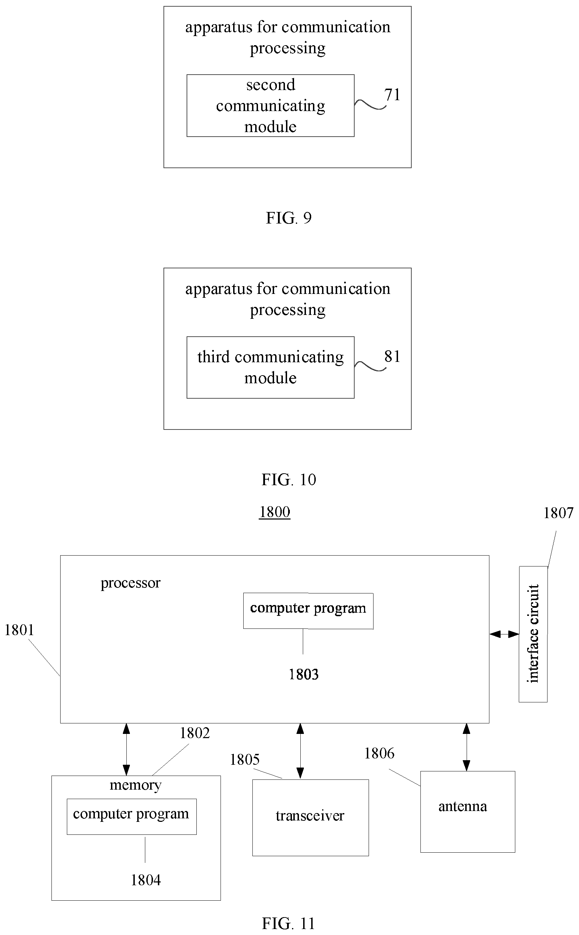

FIG. 9 is a block diagram illustrating an apparatus for communication processing according to an embodiment of the disclosure. The apparatus may be applied to a target network device.

As illustrated in FIG. 9, the apparatus may include: a second communicating module 71, configured to receive first information sent by a source network device; and determine, based on the first information, whether agrees to perform data forwarding of a first AI model with the source network device, in which the first AI model is an AI model that is not completely transmitted between the source network device and a terminal and requires continued transmission.

In some embodiments, the data forwarding includes: DL data forwarding of the first AI model and UL data forwarding of the first AI model.

In some embodiments, the second communicating module 71 is also configured to: receive a handover request sent by the source network device, in which the first information is carried in the handover request.

In some embodiments, the second communicating module 71 is also configured to: receive an AI model transfer request sent by the source network device; and determine, based on the AI model transfer request, whether agrees to perform the data forwarding of the first AI model with the source network device.

In some embodiments, the first information includes at least one of:
DL forwarding; UL forwarding proposal; identification information of a transmitted AI model; identification information of the first AI model; configuration information of an SRB for bearing the first AI model; and configuration information of a DRB for bearing the first AI model.

In some embodiments, the second communicating module 71 is also configured to: send second information to the source network device, in which the second information is used to determine that the target network device agrees to perform the data forwarding of the first AI model with the source network device, and address information of a communication tunnel for the data forwarding.

In some embodiments, the second communicating module 71 is also configured to: send a handover request acknowledge to the source network device, in which the second information is carried in the handover request acknowledge.

In some embodiments, the second communicating module 71 is also configured to: send an AI model transfer request acknowledge to the source network device, in which the AI model transfer request acknowledge is used to determine that the target network device agrees to perform the data forwarding of the first AI model with the source network device, and the address information of the communication tunnel for the data forwarding.

In some embodiments, the second information includes at least one of:
DL forwarding UP TNL information; or UL forwarding UP TNL information.

In some embodiments, the second communicating module 71 is also configured to: perform the data forwarding of the first AI model with the source network device by using the communication tunnel corresponding to the address information.

In some embodiments, the data forwarding includes: DL data forwarding of the first AI model, and the data of the first AI model includes: a first part of data already sent by the source network device to the terminal and a second part of data not yet sent by the source network device to the terminal;
the second communicating module 71 is also configured to: receive the second part of data sent by the source network device by using the communication tunnel corresponding to the address information.

In some embodiments, the data forwarding includes: UL data forwarding of the first AI model, and the data of the first AI model includes: a third part of data already received by the source network device from the terminal and a fourth part of data not yet received by the source network device from the terminal;
the second communicating module 71 is also configured to: receive the third part of data sent by the source network device by using the communication tunnel corresponding to the address information.

In some embodiments, a data packet for the data forwarding may be in a format of a PDCP SDU.

With the technical solution of this embodiment, the data forwarding of the first AI model between the source network device and the target network device may be realized, thus the data forwarding of the AI model independent of the PDU session may be realized. Further, when the terminal hands over between different network devices, even if the previous AI model is not completely transmitted, the requirement for complete transmission of the AI model may be satisfied.

FIG. 10 is a block diagram illustrating an apparatus for communication processing according to an embodiment of the disclosure. The apparatus may be applied to a terminal.

As illustrated in FIG. 10, the apparatus may include: a third communicating module 81, configured to perform transmission on data of a first AI model between the terminal and a target network device, in which the first AI model is an AI model that is not completely transmitted between the terminal and the source network device and requires continued transmission; and the target network device performs data forwarding of the first AI model to a source network device.

In some embodiments, the data forwarding includes: DL data forwarding of the first AI model and UL data forwarding of the first AI model.

In some embodiments, the data forwarding includes: DL data forwarding of the first AI model, and the data of the first AI model includes: a first part of data already sent by the source network device to the terminal and a second part of data not yet sent by the source network device to the terminal;
the third communicating module 81 is also configured to: receive the second part of data sent by the target network device.

In some embodiments, the data forwarding includes: UL data forwarding of the first AI model, and the data of the first AI model includes: a third part of data already received by the source network device from the terminal and a fourth part of data not yet received by the source network device from the terminal;
the third communicating module 81 is also configured to: send the fourth part of data to the target network device.

In some embodiments, a data packet for the data forwarding may be in a format of a PDCP SDU.

Referring to FIG. 11, it is a block diagram illustrating a communication device 1800 according to an embodiment of the disclosure. The communication device 1800 may be a network device, a terminal, a chip, a system on chip or a processor that supports the network device to realize the above method, or a chip, a system on chip or a processor that supports the terminal to realize the above method. The communication device 1800 may be configured to realize the methods described in the method embodiments. For details, please refer to descriptions in the method embodiments.

The communication device 1800 may include one or more processors 1801. The processor 1801 may include a general purpose processor or a dedicated processor. For example, the processor may be a baseband processor or a central processor. The baseband processor may be configured to process a communication protocol and communication data, and the central processor may be configured to control a communication device (such as, a base station, a baseband chip, a terminal, a terminal chip, a DU or CU, etc.), to execute a computer program, and process data of the computer program.

Alternatively, the communication device 1800 may also include one or more memories 1802 with a computer program 1804 stored. The computer program 1804 is executed by the processor 1801, to enable the communication device 1800 to perform the method as described in the above method embodiments. Alternatively, the memory 1802 may also store data. The communication device 1800 and the memory 1802 may be independently configured or integrated together.

Alternatively, the communication device 1800 may also include a transceiver 1805 and an antenna 1806. The transceiver 1805 may be called a transceiving unit, a transceiving machine or a transceiving circuit, which may be configured to realize a transceiving function. The transceiver 1805 may include a receiver and a transmitter. The receiver may be called a receiving machine or a receiving circuit, etc., for realizing a receiving function. The transmitter may be called a transmitting machine or a transmitting circuit, etc. for realizing a transmitting function.

Alternatively, the communication device 1800 may also include one or more interface circuits 1807. The interface circuit 1807 is configured to receive code instructions and transmit the code instructions to the processor 1801. The code instructions are executed by the processor 1801 to enable the communication device 1800 to execute the method as described in the above method embodiments.

Alternatively, the processor 1801 may include a transceiver configured to realize receiving and transmitting functions. For example, the transceiver may be a transceiving circuit, or an interface, or an interface circuit. The transceiving circuit, the interface or the interface circuit for realizing the receiving and transmitting functions may be separate or integrated together. The transceiving circuit, the interface or the interface circuit may be configured to read and write codes/data, or the transceiving circuit, the interface or the interface circuit may be configured to transmit or deliver a signal.

Alternatively, the processor 1801 may store a computer program 1803. The computer program 1803 is executed by the processor 1801 to enable the communication device 1800 to execute the method as described in the above method embodiments. The computer program 1803 may be solidified in the processor 1801, in which case the processor 1801 may be realized by hardware.

Alternatively, the communication device 1800 may include a circuit that may realize a transmitting or receiving or communication function in the above method embodiments. The processor and the transceiver described in the disclosure may be realized on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may also be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal, but the scope of the communication device described in the disclosure is not limited, and a structure of the communication device may not be limited by FIG. 11. The communication device may be a stand-alone device or may be a part of a larger device. For example, the communication device may be the following:
(1) a stand-alone integrated circuit (IC), or a chip, or a system on chip or a subsystem;
(2) a set of one or more ICs, alternatively, which may also include a storage component for storing data and a computer program;
(3) an ASIC, such as a Modem;
(4) a module that may be embedded within other devices;
(5) a receiver, a terminal, a smart UE device, a cellular phone, a wireless device, a handset, a mobile unit, a vehicle-mounted device, a network side device, a cloud device, an artificial intelligence device, etc.; or
(6) others, and so forth.

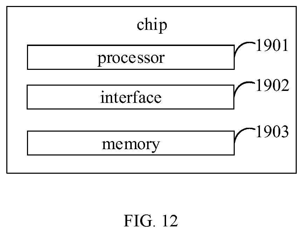

In the case that the communication device may be a chip or a system on chip, reference may be made to a block diagram of a chip illustrated in FIG. 12. FIG. 12 is a block diagram illustrating a chip according to an embodiment of the disclosure. The chip illustrated in FIG. 12 includes a processor 1901 and an interface 1902. There may be one or more processors 1901 and there may be a plurality of interfaces 1902.

Alternatively, the chip also includes a memory 1903, configured to save necessary computer program and data.

Those skilled in the related art may understand that various illustrative logical blocks and steps listed in embodiments of the disclosure may be realized by electronic hardware, computer software or a combination of electronic hardware and computer software. Whether the function is realized by hardware or software depends on a specific application and a design requirement for an overall system. Those skilled in the art may realize the functions by using various methods for each specific application, but such an implementation should not be understood as beyond the protection scope of the embodiments of the disclosure.

A readable storage medium with instructions stored is also provided in the disclosure. When the instructions are executed by a computer, a function of any one of the above method embodiments are realized.

A computer program product is also provided in the disclosure. The computer program product is configured to realize functions of any one of the above method embodiments when executed by a computer.

In the above embodiments, the functions may be wholly or partially realized by software, hardware, firmware, or any combination of them. When realized by software, the functions may be realized in whole or in part in the form of a computer program product. The computer program product includes one or more computer programs. Procedures or functions according to the embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, but not intended to limit the scope of the embodiments of the disclosure, not to indicate an order of precedence.

The phase "at least one" in the disclosure may also be described as one or more, and the phase "a plurality of" may refer to two, three, four or more, which is not limited in the disclosure. In the embodiments of the disclosure, for a type of technical features, technical features in the type of technical features are distinguished by "first", "second", "third", "A", "B", "C" and "D", and there is no order of precedence or magnitude between the technical features described in "first", "second", "third", "A", "B", "C" and "D".

As used in the disclosure, the terms "machine-readable medium" and "computer-readable medium" refer to any computer program product, device, and/or apparatus (such as, disk, optical disk, memory, programmable logic device (PLD)) that is used to provide machine instructions and/or data to a programmable processor, including a machine-readable medium that receives machine instructions as machine-readable signals. The term "machine-readable signal" refers to any signal for providing machine instructions and/or data to the programmable processor.

The system and technology described in the disclosure may be realized in a computing system (e.g., as a data server) that includes backend components, or in a computing system (e.g., an application server) that includes middleware components, or in a computing system (e.g., a user computer with a graphical user interface or web browser, through which a user can interact with the system and technology described herein) that includes frontend components, or in a system including any combination of backend components, middleware components, or frontend components. The components of the system can be interconnected via any form or medium of digital data communication (e.g., a communication network). An example of the communication network includes a local area network (LAN), a wide area network (WAN), and the Internet.

A computer system may include both clients and servers. The client and server are typically located remotely from each other and usually interact through a communication network. The client-server relationship is established by running computer programs on respective computers and having a client-server relationship with each other.

It should be understood that various forms of processes illustrated above can be used to reorder, add or delete steps. For example, the steps described in embodiments of the disclosure may be executed in parallel, sequentially, or in a different order, as long as the desired result of the technical solution disclosed in the invention is achieved, which is not limited in the disclosure.

In addition, it should be understood that various embodiments of the disclosure may be realized individually or in conjunction with other embodiments as permitted by the program.

Those skilled in the related art may realize that, in combination with the examples described in embodiments of the disclosure, units and algorithm steps may be realized by electronic hardware or a combination of electronic hardware and computer software. Whether the functions are executed by hardware or software depends on a specific application and a design constraint of the technical solution. Those skilled in the art may employ different methods for each specific application to realize the described functions, but such implementation should not be considered as going beyond the scope of the disclosure.

Those skilled in the art may clearly understand that for a detailed working process of a system, an apparatus and a unit described above reference may be made to a corresponding process in the above method embodiments, which is not repeated here.

The above are only implementations of the disclosure. However, the protection scope of the disclosure is not limited herein. Changes and substitutions that may be easily considered by those skilled in the art shall be included within the protection scope of the disclosure. Thus, the protection scope of the disclosure shall be subject to the protection scope of claims.

## Claims

1. A method for communication processing, executed by a source network device, comprising:
sending first information to a target network device,
wherein the first information is used to inquire whether the target network device agrees to perform data forwarding of a first artificial intelligence (AI) model with the source network device.

2. The method of claim 1, wherein the first AI model is an AI model that is not completely transmitted between the source network device and a terminal and requires continued transmission.

3. The method of claim 1 or 2, wherein sending the first information to the target network device comprises:
sending a handover request to the target network device,
wherein the first information is carried in the handover request.

4. The method of claim 1 or 2, wherein sending the first information to the target network device comprises:
sending an AI model transfer request to the target network device,
wherein the AI model transfer request is used to inquire whether the target network device agrees to perform the data forwarding of the first AI model with the source network device.

5. The method of any one of claims 1 to 4, wherein the first information comprises at least one of:
downlink (DL) forwarding;
uplink (UL) forwarding proposal;
identification information of a transmitted AI model;
identification information of the first AI model;
configuration information of a signaling radio bearer (SRB) for bearing the first AI model; or
configuration information of a data radio bearer (DRB) for bearing the first AI model.

6. The method of any one of claims 1 to 5, wherein after sending the first information to the target network device, the method further comprises:
receiving second information sent by the target network device; and
determining, based on the second information, that the target network device agrees to perform the data forwarding of the first AI model with the source network device, and address information of a communication tunnel for the data forwarding.

7. The method of claim 6, wherein receiving the second information sent by the target network device comprises:
receiving a handover request acknowledge sent by the target network device,
wherein the second information is carried in the handover request acknowledge.

8. The method of claim 6, wherein receiving the second information sent by the target network device comprises:
receiving an AI model transfer request acknowledge sent by the target network device; and
determining, based on the second information, that the target network device agrees to perform the data forwarding of the first AI model with the source network device, and the address information of the communication tunnel for the data forwarding comprises:
determining, based on the AI model transfer request acknowledge, that the target network device agrees to perform the data forwarding of the first AI model with the source network device, and the address information of the communication tunnel for the data forwarding.

9. The method of any one of claims 6 to 8, wherein the second information comprises at least one of:
DL forwarding user plane (UP) transport network layer (TNL) information; or
UL forwarding UP TNL information.

10. The method of any one of claims 6 to 9, further comprising:
performing the data forwarding of the first AI model with the target network device by using the communication tunnel corresponding to the address information.

11. The method of claim 10, wherein the data forwarding comprises: DL data forwarding of the first AI model; and
performing the data forwarding of the first AI model with the target network device by using the communication tunnel corresponding to the address information comprises:
sending a second part of data not yet sent to the terminal to the target network device by using the communication tunnel corresponding to the address information.

12. The method of claim 10, wherein the data forwarding comprises: UL data forwarding of the first AI model; and
performing the data forwarding of the first AI model with the target network device by using the communication tunnel corresponding to the address information comprises:
sending a third part of data already received from the terminal to the target network device by using the communication tunnel corresponding to the address information.

13. The method of any one of claims 1 to 12, wherein a data packet for the data forwarding is in a format of a packet data convergence protocol (PDCP) service data unit (SDU).

14. A method for communication processing, executed by a target network device, comprising:
receiving first information sent by a source network device; and
determining, based on the first information, whether agrees to perform data forwarding of a first artificial intelligence (AI) model with the source network device.

15. The method of claim 14, wherein the first AI model is an AI model that is not completely transmitted between the source network device and a terminal and requires continued transmission.

16. The method of claim 14 or 15, wherein receiving the first information sent by the source network device comprises:
receiving a handover request sent by the source network device, wherein the first information is carried in the handover request.

17. The method of claim 14 or 15, wherein receiving the first information sent by the source network device comprises:
receiving an AI model transfer request sent by the source network device; and
determining, based on the first information, whether agrees to perform the data forwarding of the first AI model with the source network device comprises:
determining, based on the AI model transfer request, whether agrees to perform the data forwarding of the first AI model with the source network device.

18. The method of any one of claims 14 to 17, wherein the first information comprises at least one of:
downlink (DL) forwarding;
uplink (UL) forwarding proposal;
identification information of a transmitted AI model;
identification information of the first AI model;
configuration information of a signaling radio bearer (SRB) for bearing the first AI model; or
configuration information of a data radio bearer (DRB) for bearing the first AI model.

19. The method of any one of claims 14 to 18, wherein after determining, based on the first information, whether agrees to perform the data forwarding of the first AI model with the source network device, the method further comprises:
sending second information to the source network device,
wherein the second information is used to determine that the target network device agrees to perform the data forwarding of the first AI model with the source network device, and to determine address information of a communication tunnel for the data forwarding.

20. The method of claim 19, wherein sending the second information to the source network device comprises:
sending a handover request acknowledge to the source network device,
wherein the second information is carried in the handover request acknowledge.

21. The method of claim 19, wherein sending the second information to the source network device comprises:
sending an AI model transfer request acknowledge to the source network device,
wherein the AI model transfer request acknowledge is used to determine that the target network device agrees to perform the data forwarding of the first AI model with the source network device, and to determine the address information of the communication tunnel for the data forwarding.

22. The method of any one of claims 19 to 21, wherein the second information comprises at least one of:
DL forwarding user plane (UP) transport network layer (TNL) information; or
UL forwarding UP TNL information.

23. The method of any one of claims 19 to 22, further comprising:
performing the data forwarding of the first AI model with the source network device by using the communication tunnel corresponding to the address information.

24. The method of claim 23, wherein the data forwarding comprises: DL data forwarding of the first AI model; and
performing the data forwarding of the first AI model with the source network device by using the communication tunnel corresponding to the address information comprises:
receiving, from the source network device, a second part of data not yet sent by the source network device to the terminal by using the communication tunnel corresponding to the address information.

25. The method of claim 23, wherein the data forwarding comprises: UL data forwarding of the first AI model; and
performing the data forwarding of the first AI model with the source network device by using the communication tunnel corresponding to the address information comprises:
receiving, from the source network device, a third part of data already received from the terminal by using the communication tunnel corresponding to the address information.

26. The method of any one of claims 14 to 25, wherein a data packet for the data forwarding is in a format of a packet data convergence protocol (PDCP) service data unit (SDU).

27. A method for communication processing, executed by a terminal, comprising:
performing transmission on data of a first artificial intelligence (AI) model between the terminal and a target network device,
wherein the target network device performs data forwarding of the first AI model with a source network device.

28. The method of claim 27, wherein the first AI model is an AI model that is not completely transmitted between the terminal and the source network device and requires continued transmission.

29. The method of claim 28, wherein the data forwarding comprises: downlink (DL) data forwarding of the first AI model; and performing transmission on the data of the first AI model between the terminal and the target network device comprises: receiving, from the target network device, a second part of data not yet sent to the terminal by the source network device.

30. The method of claim 28, wherein the data forwarding comprises: uplink (UL) data forwarding of the first AI model; and
performing transmission on the data of the first AI model between the terminal and the target network device comprises:
sending a fourth part of data not yet sent to the source network device to the target network device.

31. The method of any one of claims 27 to 30, wherein a data packet for the data forwarding is in a format of a packet data convergence protocol (PDCP) service data unit (SDU).

32. An apparatus for communication processing, applied to a source network device, comprising:
a first communicating module, configured to send first information to a target network device,
wherein the first information is used to inquire whether the target network device agrees to perform data forwarding of a first artificial intelligence (AI) model with the source network device.

33. An apparatus for communication processing, applied to a target network device, comprising:
a second communicating module, configured to receive first information sent by a source network device; and determine, based on the first information, whether agrees to perform data forwarding of a first artificial intelligence (AI) model with the source network device.

34. An apparatus for communication processing, applied to a terminal, comprising:
a third communicating module, configured to perform transmission on data of a first artificial intelligence (AI) model between the terminal and a target network device, wherein the first AI model is an AI model that is not completely transmitted between the terminal and the source network device and requires continued transmission.

35. A system for communication processing, comprising:
a source network device, configured to perform the method of any one of claims 1 to 13;
a target network device, configured to perform the method of any one of claims 14 to 26; and
a terminal, configured to perform the method of any one of claims 27 to 31.

36. A communication device, comprising: a transceiver; a memory; and a processor respectively connected to the transceiver and the memory, configured to control wireless signal transmission and reception of the transceiver by executing computer-executable instructions stored in the memory, and enable the method of any one of claims 1 to 31 to be realized.

37. A computer storage medium, storing computer-executable instructions, wherein when the computer-executable instructions are executed by a processor, the method of any one of claims 1 to 31 is enabled to be realized.
